Europäisches Patentamt

European Patent Office

Office européen des brevets

(11) Veröffentlichungsnummer: **0 456 889 A2**

## (12) EUROPÄISCHE PATENTANMELDUNG

(21) Anmeldenummer: 90122468.3

(22) Anmeldetag: 26.11.90

(51) Int. Cl.⁵: **F16K 21/04**

(30) Priorität: 18.05.90 DE 4015947

(43) Veröffentlichungstag der Anmeldung:
21.11.91 Patentblatt 91/47

(84) Benannte Vertragsstaaten:
**AT BE DE DK FR GB IT NL**

(71) Anmelder: **ARATOWERK WALTER VON TASCHITZKI GmbH & CO. KG**
**Alte Forststrasse 55**
**W-5000 Köln-Rath (Heumar)(DE)**

(72) Erfinder: **von Taschitzki, Martin, Dipl.-Ing.agr.**
**Alte Forststrasse 55**
**W-5000 Köln 91(DE)**

(74) Vertreter: **Patentanwälte Dipl.-Ing. W. Dahlke**
**Dipl.-Ing. H.-J. Lippert**
**Frankenforster Strasse 137**
**W-5060 Bergisch Gladbach 1(DE)**

(54) **Selbsttränkeventil für Haustiere.**

(57) Bei dem Selbsttränkeventil in der Form eines Flüssigkeitsspenders, den die Tiere zum Trinken unmittelbar in das Maul nehmen, wobei durch das Zubeißen das Ventil geöffnet wird, weist ein die Zuflußöffnung 8 enthaltender, das leitungsseitige Ende des Selbsttränkeventils 1 abschließender Stopfen 7 einen Fortsatz 9 auf, der in ein Leitungsrohr 2 hineinragt. Dem Fortsatz 9 ist ein Düsenkörper 10 mit einer Düsenöffnung 11 zugeordnet, durch welche die Menge der in die Zuflußöffnung 8 einströmenden Flüssigkeit bestimmt wird.

FIG.1

EP 0 456 889 A2

Die Erfindung bezieht sich auf ein Selbsttränkeventil für Haustiere, vorzugsweise Schweine, die sich schnell daran gewöhnen, ein solches, einen Ventilstößel enthaltendes Selbsttränkeventil zum Trinken unmittelbar in das Maul zu nehmen und durch Zubeißen zu öffnen, indem dabei die Position des Ventilstößels verändert wird.

Bei der Tränkung von Tieren ist es wichtig, daß diese jederzeit ausreichend viel Flüssigkeit erhalten; das heißt, daß das Funktionieren der Tränke nicht durch eine Verstopfung des Zuflusses behindert werden darf. Ebenso wichtig ist es aber auch, daß den Tieren nicht mehr Flüssigkeit gespendet wird, als sie schlucken können, damit diese nicht umweltbelastend vergeudet wird.

Die bekannten Selbsttränkeventile sind meistens so gebaut, daß der die Ventilkammer abschließende Stopfen in das leitungsseitige Ende hineingeschraubt und zum Schutze seiner Zuflußöffnung ein Sieb vor diesem angeordnet ist, so daß die Leitung vor diesem Sieb sackartig endet. Häufig bewirkt jedoch der Leitungsdruck, daß Schmutzteile, die sich vor dem Sieb angesammelt haben, durch die Poren des Siebes hindurchdringen, so daß dessen Schutzwirkung nur gering ist.

Eine Aufgabe der Erfindung besteht daher darin, ein Selbsttränkeventil der vorgenannten Art zu schaffen, bei dem solche Verstopfungen des Zuflusses vermieden werden. Die Erfindung zeichnet sich dadurch aus, daß ein die Zuflußöffnung enthaltender, das leitungsseitige Ende des Selbsttränkeventils abschließender Stopfen einen Fortsatz aufweist, der in ein Leitungsrohr hineinragt, so daß das sackartige Ende der Leitung, in welchem sich die Schmutzteilchen ansammeln, erst hinter dem Einlauf in die Zuflußöffnung beginnt und daher die Tränkungsflüssigkeit dem sauberen Strom der Leitung entnommen wird.

Eine andere Aufgabe der Erfindung ist es, ein solches Selbsttränkeventil so auszustatten, daß es nur sehr wenig Mühe macht, die Menge der gespendeten Flüssigkeit auf die Trinkgeschwindigkeit der Tiere richtig abzustimmen. Diese Konstruktionsaufgabe wird bei den bisher bekannten Selbsttränkeventilen entweder ganz vernachlässigt oder in ungenügender Weise dadurch zu lösen versucht, daß ein auswechselbarer Düsenkörper hinter dem Siebvorsatz eingefügt wird. Das ist umständlich zu handhaben, weshalb das Auswechseln bei ungeübten Monteuren meistens unterbleibt, weil zum Anpassen der Zuflußmenge erst der Siebvorsatz entfernt werden muß. Weiterhin ist nachteilig, daß Schmutzteilchen, die vom Leitungsdruck durch das Sieb hindurch gedrückt worden sind, konglomerieren und dann trotz des Siebvorsatzes zur Verstopfung der Düse führen können und somit das Funktionieren des Selbsttränkeventiles beeinträchtigen.

Die Erfindung zeichnet sich weiterhin dadurch aus, daß dem Fortsatz ein Düsenkörper mit einer Düsenöffnung zugeordnet ist, durch welche die Menge der in die Zuflußöffnung einströmenden Flüssigkeit bestimmt wird. Dabei kann der Düsenkörper so gestaltet sein, daß er in das Ende des Fortsatzes eingesteckt oder eingeschraubt wird. Zweckmäßig ist der Düsenkörper kappenförmig ausgebildet.

Besonders vorteilhaft ist es, wenn der Fortsatz ein Haftorgan zum Festhalten des Düsenkörpers aufweist. Das Haftorgan kann aus einer Verdickung des Fortsatzes bestehen, z.B. in Form eines Doppelkonus, während der Düsenkörper aus plastischem Material gebildet ist, welches das Haftorgan elastisch umschließt.

Dadurch wird erreicht, daß die Durchflußmenge schnell und ohne besondere Mühe genau eingestellt werden kann, weil sich der Düsenkörper dem Zugriff des Monteurs offen darbietet und schnell gewechselt werden kann, ohne daß zuvor das rückwärtige Ende des Selbsttränkeventils geöffnet werden müßte.

Die Erfindung wird anhand der in den Zeichnungen dargestellten Ausführungsformen erläutert:

Figur 1
zeigt eine Ausführungsform der Erfindung im Längsschnitt und im Schema.

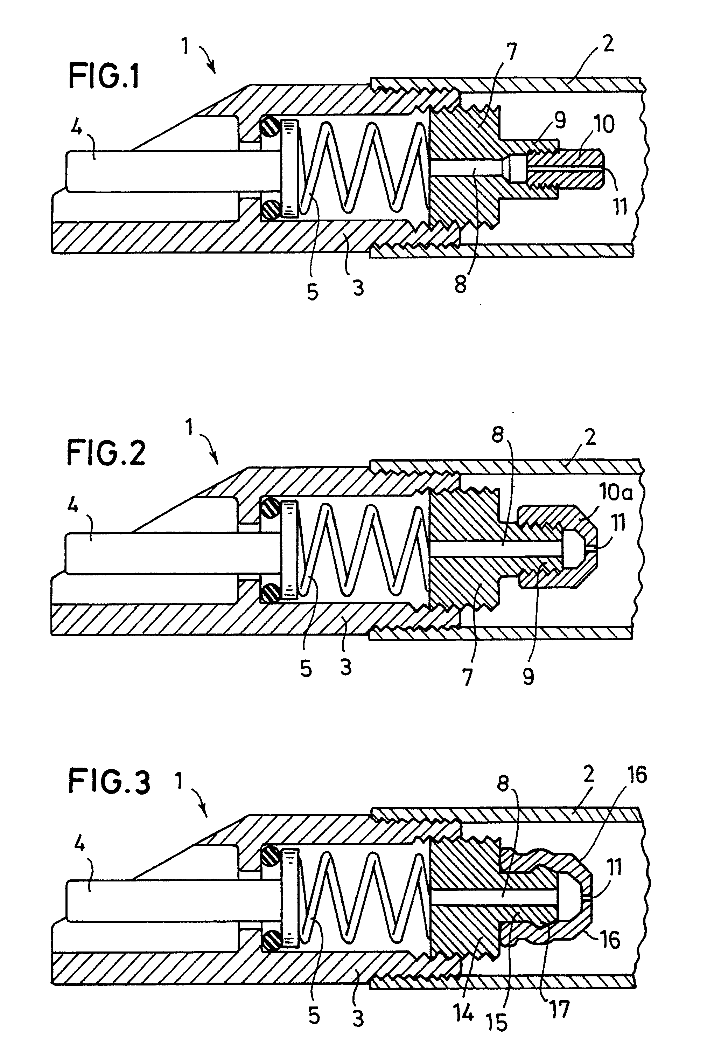

Die Figuren 2 und 3
sind weitere Ausführungensformen der Erfindung in abgeänderter Form im Längsschnitt und schematisch.

Bei der Selbsttränkevorrichtung 1 ist am Ende der Zuflußleitung 2 ein Selbsttränkeventil 3 eingeschraubt, das einen Ventilstößel 4 und eine auf den Stößel 4 wirkende Druckfeder 5 aufweist. Das leitungsseitige Ende des Selbsttränkeventils ist durch einen Stopfen 7 verschlossen, der eine Zuflußöffnung 8 aufweist. Ferner trägt der Stopfen 7 einen Fortsatz 9, mit dem ein Düsenkörper 10 verbunden ist. Der Düsenkörper 10 ist mit einer Düsenöffnung bzw. Düsenbohrung 11 versehen, durch die die Menge der die Zuflußöffnung 8 verströmenden Flüssigkeit bestimmt wird. Bei dem Beispiel 1 der Figur 1 ist der Düsenkörper 10 in die Zuflußöffnung 8 einsteckbar oder einschraubbar.

Bei der Ausführungsform der Figur 2 ist der Düsenkörper 10a kappenförmig ausgebildet und auf den Umfang des Fortsatzes 9 aufschraubbar angeordnet. Die Düsenbohrung ist mit 11 bezeichnet.

Bei der Ausführungsform der Figur 3 weist der Stopfen 14 einen Fortsatz 15 auf, auf den der Düsenkörper 16 aufsetzbar ist. Der Fortsatz 15 ist mit einem Haftorgan 17 versehen, das aus einer Verdickung bestehen kann, welche z.B. die Form eines Doppelkonus haben kann. Der Düsenkörper 16 besteht beispielsweise aus plastischem Material, das die verdickung 17 elastisch umschließen kann.

## Patentansprüche

1. Selbsttränkeventil in der Form eines Flüssigkeitsspenders, den die Tiere, vorzugsweise Schweine, zum Trinken unmittelbar in das Maul nehmen, wobei durch das Zubeißen das Ventil geöffnet wird, indem sich die Position des Ventilstößels verändert, dadurch gekennzeichnet, daß ein die Zuflußöffnung (8) enthaltender, das leitungsseitige Ende des Selbsttränkeventils (1) abschließender Stopfen (7) einen Fortsatz (9) aufweist, der in ein Leitungsrohr (2) hineinragt, und daß dem Fortsatz (9) ein Düsenkörper (10) mit einer Düsenöffnung (11) zugeordnet ist, durch welche die Menge der in die Zuflußöffnung (8) einströmenden Flüssigkeit bestimmt wird.

2. Selbstränkeventil nach Anspruch 1, dadurch gekennzeichnet, daß der Düsenkörper (10) in das Ende des Fortsatzes (9) einsteckbar oder einschraubbar ist.

3. Selbsttränkeventil nach Anspruch 1 oder 2, dadurch gekennzeichnet, daß der Düsenkörper (10a,16) kappenförmig ausgebildet ist und über das Ende des Fortsatzes (9) geschraubt oder gestülpt ist.

4. Selbsttränkeventil nach einem der Ansprüche 1 bis 3, dadurch gekennzeichnet, daß der Fortsatz (9) ein Haftorgan zum Festhalten des Düsenkörpers (10a,16) aufweist.

5. Selbsttränkeventil nach einem der Ansprüche 1 bis 4, dadurch gekennzeichnet, daß das Haftorgan von einem Gewinde gebildet ist, auf das der Düsenkörper (10a,16) schraubbar ist.

6. Selbsttränkeventil nach einem der Ansprüche 1 bis 5, dadurch gekennzeichnet, daß das Haftorgan aus einer Verdickung (17) des Fortsatzes (15) besteht, die die Form eines Doppelkonus aufweisen kann, während der Düsenkörper (16) aus plastischem Material besteht, das das Haftorgan (17) elastisch umschließt.

FIG.1

FIG.2

FIG.3